# EUROPEAN PATENT SPECIFICATION

(11) **EP 2 400 788 B1**
(45) Date of publication and mention of the grant of the patent: **28.08.2019**
(21) Application number: 11181862.1
(22) Date of filing: 23.01.2008
(51) Int. Cl.: H04W 52/02, H04W 72/00, H04W 72/12

(54) **DEVICES AND METHODS FOR POINT-TO-MULTIPOINT MULTIPLEXING AND SCHEDULING**
GERÄTE UND VERFAHREN FÜR PUNKT-ZU-MEHRPUNKT-MULTIPLEXING UND -TERMINIERUNG
APPAREILS ET PROCÉDÉS DE MULTIPLEXAGE ET DE PROGRAMMATION POINT À MULTIPOINTS

(30) Priority: 10.12.2007 US 953771
(43) Date of publication of application: 28.12.2011
(62) Divisional of application: 10154438.5
(73) Proprietor: BlackBerry Limited, Waterloo, ON N2K 0A7 (CA)
(72) Inventor: Zhijun, Cai, Euless, TX Texas 76039-4138 (US)
(74) Representative: Hibbert, Juliet Jane Grace

(56) References cited:
- US-A1- 2009 046 617
- NTT DOCOMO ET AL: "MBMS Channel Structure for E-UTRA Downlink", 3GPP DRAFT; R1-060778 DL MBMS CHANNEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20060321, 21 March 2006 (2006-03-21), XP050101693, [retrieved on 2006-03-21]
- MOTOROLA: "MBMS Modulation and Coding State Selection", 21 June 2006 (2006-06-21), 3GPP DRAFT; R2-061985 EMBMS MCS DETERMINATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050142011, [retrieved on 2006-06-21] * the whole document *
- MOTOROLA: "Uplink Feedback for E-MBMS", 3GPP DRAFT; R1-072710 E-MBMS_FEEDBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Orlando, USA; 20070620, 20 June 2007 (2007-06-20), XP050106397, [retrieved on 2007-06-20]
- "Universal Mobile Telecommunications System (UMTS); Introduction of the Multimedia Broadcast/Multicast Service (MBMS) in the Radio Access Network (RAN); Stage 2 (3GPP TS 25.346 version 7.3.0 Release 7); ETSI TS 125 346", IEEE, LIS, SOPHIA ANTIPOLIS CEDEX, FRANCE, vol. 3-R2, no. V7.3.0, 1 March 2007 (2007-03-01), XP014037922, ISSN: 0000-0001

## Description

In traditional wireless telecommunications systems, transmission equipment in a base station transmits signals throughout a geographical region known as a cell. As technology has evolved, more advanced network access equipment has been introduced that can provide services that were not possible previously. This advanced network access equipment might include, for example, an enhanced node-B (ENB) rather than a base station or other systems and devices that are more highly evolved than the equivalent equipment in a traditional wireless telecommunications system. Such advanced or next generation equipment are typically referred to as long-term evolution (LTE) equipment. For LTE equipment, the region in which a wireless device can gain access to a telecommunications network might be referred to by a name other than "cell", such as "hot spot". As used herein, the term "cell" will be used to refer to any region in which a wireless device can gain access to a telecommunications network, regardless of whether the wireless device is a traditional cellular device, an LTE device, or some other device.

Devices that might be used by users in a telecommunications network can include both mobile terminals, such as mobile telephones, personal digital assistants, handheld computers, portable computers, laptop computers, tablet computers and similar devices, and fixed terminals such as residential gateways, televisions, set-top boxes and the like. Such devices will be referred to herein as user equipment or UE.

Services that might be provided by LTE-based equipment can include broadcasts or multicasts of television programs, streaming video, streaming audio, and other multimedia content. Such services are commonly referred to as multimedia broadcast multicast services (MBMS). An MBMS might be transmitted throughout a single cell or throughout several contiguous or overlapping cells. The MBMS may be communicated from an ENB to a UE using point-to-point (PTP) communication or point-to-multipoint (PTM) communication. The PTP communication is similar to conventional cellular network communication in that there is a dedicated radio bearer between the ENB and the user equipment. The PTP communication from the ENB may enable high quality communication with the user equipment in part because of the two-way nature of the communication between the user equipment and the ENB using various enhancements such as hybrid automatic repeat request (HARQ) and the fast link adaptation. When a large number of user equipment communicate with an ENB using PTP communication, a substantial amount of overhead may be required for establishing and maintaining the PTP communication and a substantial amount of the available spectrum may be occupied.

The PTM communication may include utilizing a dedicated channel or dedicated carrier to broadcast data or services to multiple users. While a certain amount of overhead may be required to initiate a PTM communication, the overhead is relatively small and may not vary in relation to the number of UEs. That is, as more UEs utilize PTM communication, the overhead required to establish and maintain PTM communication remains approximately the same. The PTM communication may also improve spectral efficiency as the number of UEs increases because no new transmissions are required for new added users. In some cases, PTM communication is limited to a single cell, wherein communications are restricted between the ENB and one or more UEs of that cell. Such restricted communication is referred to as single cell PTM (SC-PTM) communication.

3GPP submission no. R1-060778 by NTT DOCOMO et al, entitled "MBMS Channel Structure for E-UTRA Downlink", 3GPP DRAFT; R1-060778 DL MBMS CHANNEL, 3rd Generation Partnership Project (3GPP), vol. RAN WG1, no. Athens, Greece; 20060321 relates to MBMS. By taking advantage of soft-combining of received signals from multiple cell sites within the cyclic prefix (CP), OFDM based radio access in particular achieves high affinity to MBMS provisioning. This paper describes views on the MBMS channel structure for OFDM based radio access in the E-UTRA downlink.

US patent application no. US2009/046617 describes techniques for supporting broadcast, multicast, and unicast services in a cellular system. A Node B may multiplex data for broadcast and multicast services and data for unicast services on radio resources available for transmission. The Node B may periodically send scheduling information used to determine the radio resources carrying the broadcast and multicast services. In one design, the Node B may time division multiplex the data for the broadcast and multicast services and the data for the unicast services. The scheduling information may convey time unit(s) used for each broadcast or multicast service. In another design, the Node B may map the data for the broadcast and multicast services to time frequency blocks. The scheduling information may (i) convey the time frequency block(s) used for each broadcast or multicast service or (ii) point to control information conveying the time frequency block(s) used for each service.

### GENERAL

An enhanced node B "ENB" for use in a wireless communication network, a user equipment ("UE") for use in a wireless communication network, a method for operating an enhanced node B ("ENB") in a wireless communication network and a method for operating a user equipment in a wireless communication network are defined in the claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Figure 1 is an illustration of a cellular network according to an embodiment of the disclosure.
Figure 2 is an illustration of a cell in a cellular network according to an embodiment of the disclosure.
Figure 3 is a diagram of a structure for a multimedia broadcast multicast service transmission operable for some of the various embodiments of the disclosure.
Figure 4 is a diagram of a wireless communications system including a mobile device operable for some of the various embodiments of the disclosure.
Figure 5 is a block diagram of a mobile device operable for some of the various embodiments of the disclosure.
Figure 6 is a diagram of a software environment that may be implemented on a mobile device operable for some of the various embodiments of the disclosure.
Figure 7 is an exemplary general purpose computer according to one embodiment of the present disclosure.

### DESCRIPTION OF PREFERRED EMBODIMENTS

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

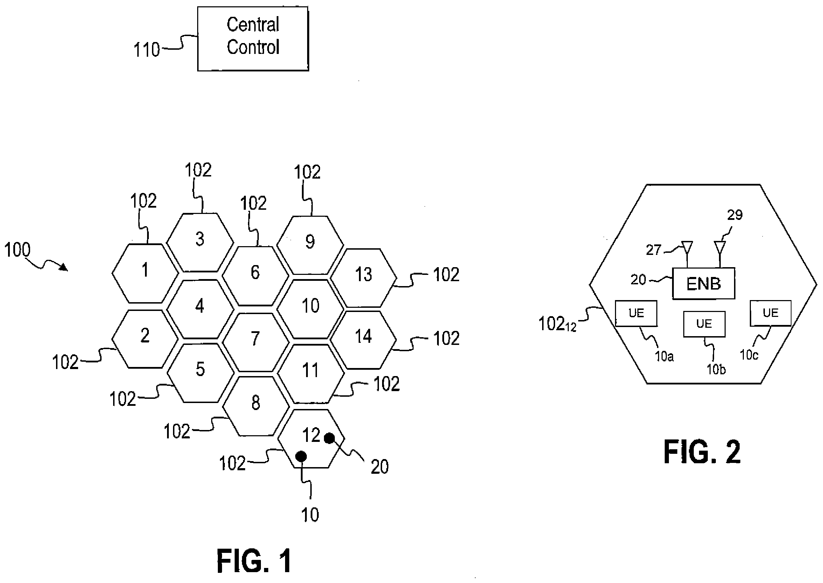

Figure 1 illustrates an exemplary cellular network 100 according to an embodiment of the disclosure. The cellular network 100 may include a plurality of cells 102₁, 102₂, 102₃, 102₄, 102₅, 102₆, 102₇, 102₈, 102₉, 102₁₀, 102₁₁, 102₁₂, 102₁₃, and 102₁₄ (collectively referred to as cells 102). As is apparent to persons of ordinary skill in the art, each of the cells 102 represents a coverage area for providing cellular services of the cellular network 100 through communication from an enhanced node B (ENB). While the cells 102 are depicted as having nonoverlapping coverage areas, persons of ordinary skill in the art will recognize that one or more of the cells 102 may have partially overlapping coverage with adjacent cells. In addition, while a particular number of the cells 102 are depicted, persons of ordinary skill in the art will recognize that a larger or smaller number of the cells 102 may be included in the cellular network 100.

One or more UEs 10 may be present in each of the cells 102. Although only one UE 10 is depicted and is shown in only one cell 102₁₂, it will be apparent to one of skill in the art that a plurality of UEs 10 may be present in each of the cells 102. An ENB 20 in each of the cells 102 performs functions similar to those of a traditional base station. That is, the ENBs 20 provide a radio link between the UEs 10 and other components in a telecommunications network. While the ENB 20 is shown only in cell 102₁₂, it should be understood that an ENB would be present in each of the cells 102. Also, radio links other than the ENBs 20 may be used. A central control 110 may also be present in the cellular network 100 to oversee some of the wireless data transmissions within the cells 102.

The transmission of an MBMS in one or more of the cells 102 may include two components, a multicast control channel (MCCH) and a multicast traffic channel (MTCH). The MTCH delivers the actual content of the MBMS while the MCCH delivers control information related to the MBMS. The MCCH may comprise key control information to specify how the content in the MTCH is delivered by the ENB and received by the UE.

Figure 2 depicts a more detailed view of the cell 102₁₂. The ENB 20 in cell 102₁₂ may promote communication via a transmitter 27, a receiver 29, and/or other well known equipment. Similar equipment might be present in the other cells 102. A plurality of UEs 10 are present in the cell 102₁₂, as might be the case in the other cells 102. In the present disclosure, the cellular systems or cells 102 are described as engaged in certain activities, such as transmitting signals; however, as will be readily apparent to one skilled in the art, these activities would in fact be conducted by components comprising the cells.

Each of the cells 102 within the cellular network 100 may operate to communicate MBMS and other services to the UEs using PTP communication or using PTM communication. The UE may include any device that may communicate using the cellular network 100. For example, the UE may include devices such as a cellular telephone, a laptop computer, a navigation system, or any other devices known to persons of ordinary skill in the art that may communicate using the cellular network 100. In some embodiments, some of the cells 102 may only operate to communicate services using PTP communication and/or some of the cells 102 may only operate to communicate services using PTM communication.

The transmission of an MBMS in one or more of the cells 102 can include two components, a multicast control channel (MCCH) and a multicast traffic channel (MTCH). The MTCH delivers the actual content of the MBMS while the MCCH delivers control information related to the MBMS. The MCCH might include key control information that specifies how the content in the MTCH is to be delivered. Configuration information for the MCCH might be transmitted in a broadcast control channel (BCCH). Each of the cells 102 might transmit information over a BCCH to provide the UEs 10 with information about the MBMSs available in the cells 102 and with other information. When one of the UEs 10 powers up, it can receive the BCCH, read the MCCH configuration contained in the BCCH, and determine from the MCCH control information how to receive one or more MTCHs.

The MCCH control information may be divided into two portions: master control information and service control information. The master control information can also be referred to as primary MCCH (P-MCCH) information and the service control information can also be referred to as secondary MCCH (S-MCCH) information. The S-MCCH information can include information about how an MTCH can be received. The P-MCCH information can directly include the S-MCCH information or can include a pointer to a location where the S-MCCH information can be retrieved.

The S-MCCH information may include control information for one or more MTCH transmissions. This might include scheduling information for one or more MTCHs, modulation and coding information for one or more MTCHs, and SFN-related parameters. Since multiple MTCHs might be transmitted by a single ENB 20, and a different set of S-MCCH information might be needed for each MTCH, multiple sets of S-MCCH information might be associated with the BCCH transmitted by the single ENB 20.

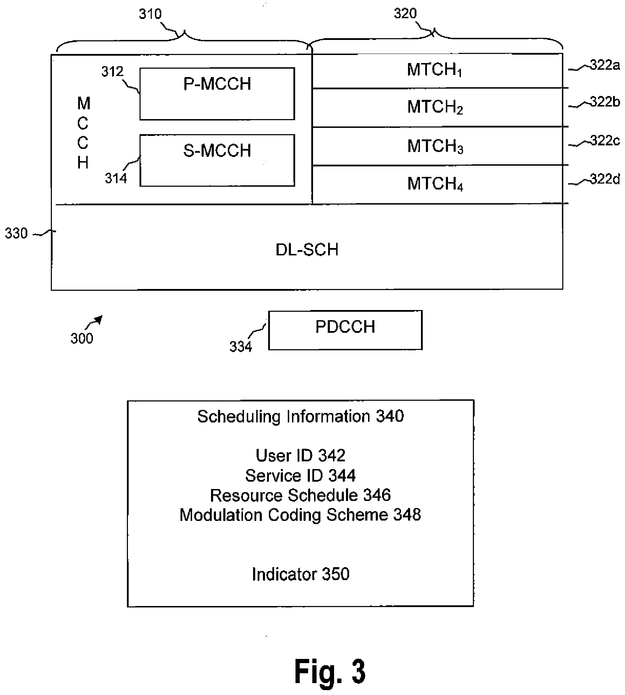

The MTCH and the MCCH are logical, upper layer channels. The lower layer transport channel on which the MTCH and the MCCH are carried is typically referred to as the MBMS multicast channel, the multicast transport channel, or simply the MCH, in the MBSFN case (multi-cell operation). In PTM communication, the MTCH and the MCCH logical layer channels may be mapped onto portions of the lower transport layer, such as a downlink shared channel (DL-SCH). Figure 3 illustrates a structure of an MBMS transmission 300. The transmission 300 includes an MCCH portion 310 and an MTCH portion 320. The MCCH 310 and the MTCH 320 are transported on a DL-SCH 330. The MCCH 310 includes a P-MCCH portion 312 and an S-MCCH portion 314. The MTCH portion 320 includes a plurality of individual MTCHs 322, each corresponding to a different MBMS. While four MTCHs 322 are shown, a larger or smaller number of MTCHs 322 could be present. Also, while the MCCH portion 310 and the MTCH portion 320 are shown being carried on the same DL-SCH 330, in some cases, the MCCH portion 310 and the MTCH portion 320 could be carried on different DL-SCHs 330.

For SC-PTM communication, the DL-SCH 330 may be transmitted by the ENB to one UE or to a plurality of UEs within the same cell. For some MBMS with considerably varying transmission rates, scheduling may be necessary in order to improve service reception and spectrum efficiency. The ENB may provide the UE with scheduling information associated with every MTCH, which comprises the MBMS content.

Because the size of data packets for MBMS services is dynamic, a certain level of dynamic scheduling is typically required. Data may be communicated to UEs using sub-frames which are usually 1 ms in length. These sub-frames include a scheduling portion and a data portion. The scheduling portion, which may also be referred to as the physical downlink control channel (PDCCH) 334, may provide scheduling information 340, which may include a user id 342 (or a user group ID), a service id 344, a resource schedule 346, and a modulation and coding scheme 348. The user id 342 (or user group ID) may designate the specific UEs (or specific UE group) in the cell for which the transmitted MTCH is intended. For example, the user id 342 (or user group ID) may specify that a MTCH may be received by or is intended for the specified user id 342. The resource schedule 346 which may include service timing including start time, end time, and duration information of the service being transmitted. The resource schedule 346 may also contain periodicity and resource allocation information. The scheduling information 340 may also include resource allocation information such as the amount of memory or buffer needed by the UE to receive the data in the signal. The scheduling information 340 may also include modulation and coding scheme (MSC) 348 information.

Due to the nature of SC-PTM broadcasts, such as their persistence or semi-persistence, the undesirability of fast adaptive MSC, and so on, dynamic scheduling of information such as the modulation and coding scheme 348 on a sub-frame (1 ms) basis may be unnecessary and inefficient. The present disclosure contemplates initially providing the modulation and coding scheme 348 as part of the scheduling information 340 as usual. However, subsequent transmissions might not include the modulation and coding scheme 348, but instead might include an indicator 350, such as a flag or single bit, that would indicate to the UE to use the previously received modulation and coding scheme 348. The ENB might periodically provide the relevant modulation and coding scheme 348 for the benefit of new UEs that enter the cell and are interested in receiving the particular service. Numerous different sequences or periods might be used regarding when to transmit the modulation and coding scheme 348 versus when the indicator 350 is transmitted, all of which are within the spirit and scope of the present disclosure. By periodically sending, for example, only a single bit, instead of the entire modulation and coding scheme 348 should be more efficient for the UE and the spectrum. The indicator 350 may also be used to identify when the allocated resource is not varying for multiple sub-frames.

In one example the ENB provides the scheduling information to the UE using the PDCCH 334. Since the nature of SC-PTM communication is primarily uni-directional and since it may be undesirable for numerous UEs to provide feedback in this environment, the user id 342 may be unnecessary. As such the present discourse further contemplates that the scheduling information 340 would not include the user id 342, but instead provide the service id 344 that designates the specific service carried by the MTCH, for example the service id may designate a particular TV program.

For some MBMS, the transmission data rates may be constant or may be known or predictable by the UEs over periodicl time cycles, such as in the case of audio applications. For such MBMS with predictable data rates, more dynamic scheduling may be unnecessary. For services with persistent schedules, the present disclosure provides for the ENB to transmit the MTCH and the MCCH to the UEs using SC-PTM and provide the scheduling information 340 in the MCCH. Occasionally providing the scheduling information 340 on some basis in the MCCH may reduce the overhead associated with providing the scheduling information 340 in each sub-frame.

In another embodiment, MBMS service scheduling opportunities, that is MBMS specific discontinuous reception (DRx), may be determined and signaled to the UE. This allows the UE to wake and retrieve desired services, but conserves UE resources by allowing the UE to sleep during signaling of services that are not of interest to the UE. In this embodiment, the ENB may signal the UE regarding DRx via the MCCH. In some embodiments, the DRx of information that is specific to one MBMS or a plurality of MBMS, also referred to as a service group, may be sent to the UE. In this manner, the UEs may wake during the time wherein a designated or interested MTCH is transmitted. The UEs may then sleep during periods where no designated or MTCH of interest is transmitted. Efficient DRx may be implemented in SC-PTM communication to extend UE battery life by conserving UE power.

In SC-PTM communication, the ENB may utilize an MCS that comprises a quadrature phase-shift keying modulation (QPSK) scheme, known by persons of ordinary skill in the art, for transmitting data bits of service content. In such MCS, services may be transmitted in data blocks or frames as small as 66 bits. As a result of transmitting data in such small blocks, no significant padding may be required to reduce transmission overhead. Consequently, multiplexing a plurality of services onto a single MTCH may not be needed. In fact, multiplexing a plurality of services onto a single MTCH may reduce implementing DRx efficiently in the cell. Using multiplexing, a UE may be required to remain turned on for a portion of time needed to receive the MTCH content comprising a plurality of multiplexed services. The UE may then be required to demultiplex the services in order to retrieve one designated service from the group. The time required to receive the multiplexed services may be considerably larger than the time needed to receive the designated service separately.

In one example of a SC-PTM communication system, the ENB may transmit a plurality of distinct services over a plurality of distinct MTCHs, wherein the MTCHs are not multiplexed. In addition to improving DRx in the cell, transmission spectrum efficiency may be improved without multiplexing in the SC-PTM communication system. By avoiding multiplexing, the system may avoid a drop in transmission efficiency when the number of retransmission requests by the UEs is large. When many retransmission requests are issued by the UEs in the cell, the system avoids transmitting unnecessary services along with the requested services from the ENB, and hence avoids reducing the spectrum efficiency for transmission.

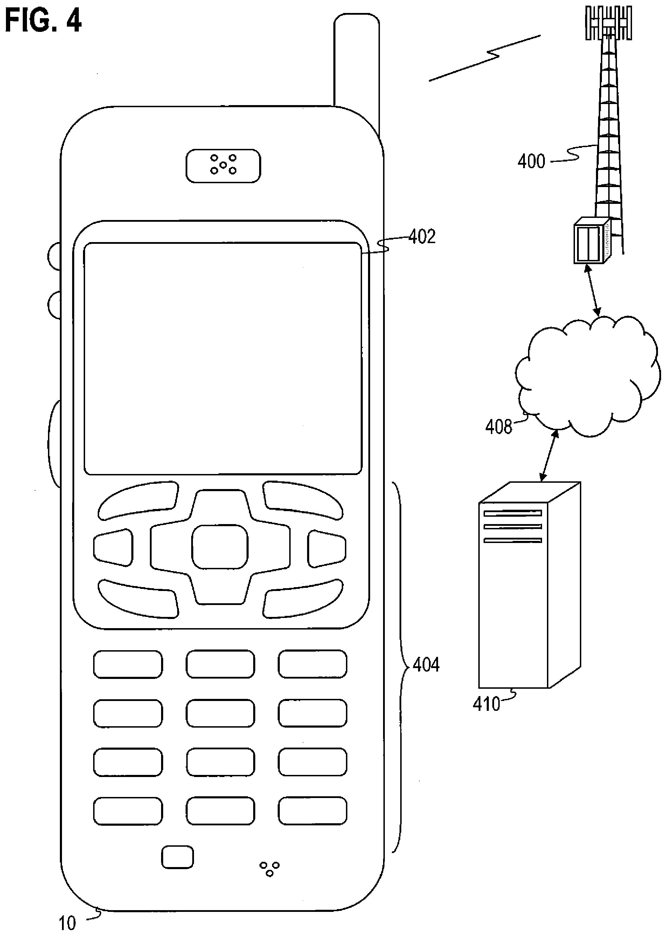

Figure 4 illustrates a wireless communications system including an embodiment of the UE 10. The UE 10 is operable for implementing aspects of the disclosure, but the disclosure should not be limited to these implementations. Though illustrated as a mobile phone, the UE 10 may take various forms including a wireless handset, a pager, a personal digital assistant (PDA), a portable computer, a tablet computer, or a laptop computer. Many suitable devices combine some or all of these functions. In some embodiments of the disclosure, the UE 10 is not a general purpose computing device like a portable, laptop or tablet computer, but rather is a special-purpose communications device such as a mobile phone, a wireless handset, a pager, a PDA, or a telecommunications device installed in a vehicle. In another embodiment, the UE 10 may be a portable, laptop or other computing device. The UE 10 may support specialized activities such as gaming, inventory control, job control, and/or task management functions, and so on.

The UE 10 includes a display 402. The UE 10 also includes a touch-sensitive surface, a keyboard or other input keys generally referred as 404 for input by a user. The keyboard may be a full or reduced alphanumeric keyboard such as QWERTY, Dvorak, AZERTY, and sequential types, or a traditional numeric keypad with alphabet letters associated with a telephone keypad. The input keys may include a trackwheel, an exit or escape key, a trackball, and other navigational or functional keys, which may be inwardly depressed to provide further input function. The UE 10 may present options for the user to select, controls for the user to actuate, and/or cursors or other indicators for the user to direct.

The UE 10 may further accept data entry from the user, including numbers to dial or various parameter values for configuring the operation of the UE 10. The UE 10 may further execute one or more software or firmware applications in response to user commands. These applications may configure the UE 10 to perform various customized functions in response to user interaction. Additionally, the UE 10 may be programmed and/or configured over-the-air, for example from a wireless base station, a wireless access point, or a peer UE 10.

Among the various applications executable by the UE 10 are a web browser, which enables the display 402 to show a web page. The web page may be obtained via wireless communications with a wireless network access node, a cell tower, a peer UE 10, or any other wireless communication network or system 400. The network 400 is coupled to a wired network 408, such as the Internet. Via the wireless link and the wired network, the UE 10 has access to information on various servers, such as a server 410. The server 410 may provide content that may be shown on the display 402. Alternately, the UE 10 may access the network 400 through a peer UE 10 acting as an intermediary, in a relay type or hop type of connection.

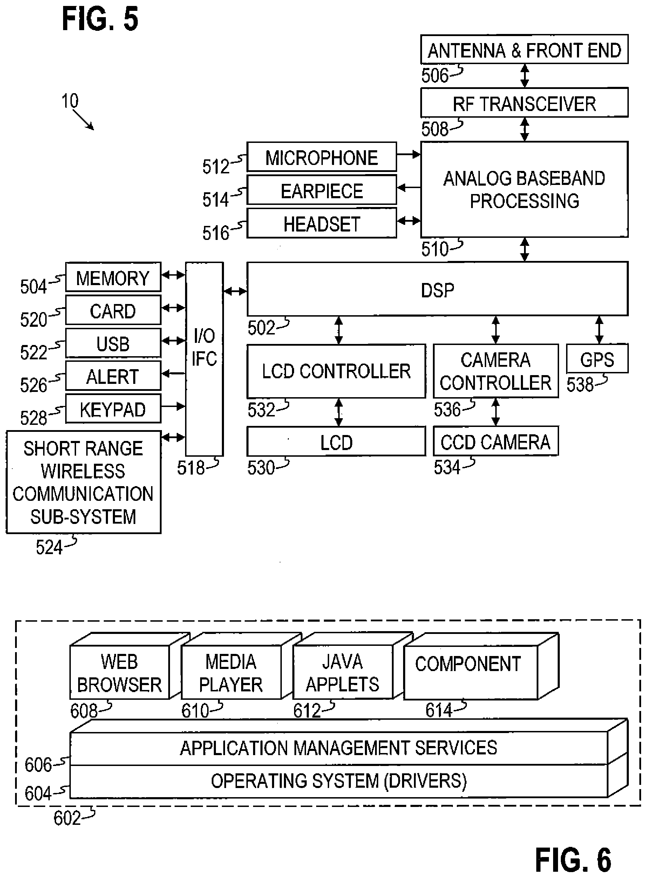

Figure 5 shows a block diagram of the UE 10. While a variety of known components of UEs 10 are depicted, in an embodiment a subset of the listed components and/or additional components not listed may be included in the UE 10. The UE 10 includes a digital signal processor (DSP) 502 and a memory 504. As shown, the UE 10 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, a short range wireless communication sub-system 524, an alert 526, a keypad 528, a liquid crystal display (LCD), which may include a touch sensitive surface 530, an LCD controller 532, a charge-coupled device (CCD) camera 534, a camera controller 536, and a global positioning system (GPS) sensor 538. In an embodiment, the UE 10 may include another kind of display that does not provide a touch sensitive screen. In an embodiment, the DSP 502 may communicate directly with the memory 504 without passing through the input/output interface 518.

The DSP 502 or some other form of controller or central processing unit operates to control the various components of the UE 10 in accordance with embedded software or firmware stored in memory 504 or stored in memory contained within the DSP 502 itself. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna and front end unit 506 may be provided to convert between wireless signals and electrical signals, enabling the UE 10 to send and receive information from a cellular network or some other available wireless communications network or from a peer UE 10. In an embodiment, the antenna and front end unit 506 may include multiple antennas to support beam forming and/or multiple input multiple output (MIMO) operations. As is known to those skilled in the art, MIMO operations may provide spatial diversity which can be used to overcome difficult channel conditions and/or increase channel throughput. The antenna and front end unit 506 may include antenna tuning and/or impedance matching components, RF power amplifiers, and/or low noise amplifiers.

The RF transceiver 508 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 510 and/or the DSP 502 or other central processing unit. In some embodiments, the RF Transceiver 508, portions of the Antenna and Front End 506, and the analog baseband processing unit 510 may be combined in one or more processing units and/or application specific integrated circuits (ASICs).

The analog baseband processing unit 510 may provide various analog processing of inputs and outputs, for example analog processing of inputs from the microphone 512 and the headset 516 and outputs to the earpiece 514 and the headset 516. To that end, the analog baseband processing unit 510 may have ports for connecting to the built-in microphone 512 and the earpiece speaker 514 that enable the UE 10 to be used as a cell phone. The analog baseband processing unit 510 may further include a port for connecting to a headset or other hands-free microphone and speaker configuration. The analog baseband processing unit 510 may provide digital-to-analog conversion in one signal direction and analog-to-digital conversion in the opposing signal direction. In some embodiments, at least some of the functionality of the analog baseband processing unit 510 may be provided by digital processing components, for example by the DSP 502 or by other central processing units.

The DSP 502 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 502 may perform modulation, coding, interleaving, and spreading, and for a receiver function the DSP 502 may perform despreading, deinterleaving, decoding, and demodulation. In another embodiment, for example in an orthogonal frequency division multiplex access (OFDMA) technology application, for the transmitter function the DSP 502 may perform modulation, coding, interleaving, inverse fast Fourier transforming, and cyclic prefix appending, and for a receiver function the DSP 502 may perform cyclic prefix removal, fast Fourier transforming, deinterleaving, decoding, and demodulation. In other wireless technology applications, yet other signal processing functions and combinations of signal processing functions may be performed by the DSP 502.

The DSP 502 may communicate with a wireless network via the analog baseband processing unit 510. In some embodiments, the communication may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the short range wireless communication sub-system 524. The USB interface 522 may be used to charge the UE 10 and may also enable the UE 10 to function as a peripheral device to exchange information with a personal computer or other computer system. The short range wireless communication sub-system 524 may include an infrared port, a Bluetooth interface, an IEEE 802.11 compliant wireless interface, or any other short range wireless communication sub-system, which may enable the UE 10 to communicate wirelessly with other nearby mobile devices and/or wireless base stations.

The input/output interface 518 may further connect the DSP 502 to the alert 526 that, when triggered, causes the UE 10 to provide a notice to the user, for example, by ringing, playing a melody, or vibrating. The alert 526 may serve as a mechanism for alerting the user to any of various events such as an incoming call, a new text message, and an appointment reminder by silently vibrating, or by playing a specific pre-assigned melody for a particular caller.

The keypad 528 couples to the DSP 502 via the interface 518 to provide one mechanism for the user to make selections, enter information, and otherwise provide input to the UE 10. The keyboard 528 may be a full or reduced alphanumeric keyboard such as QWERTY, Dvorak, AZERTY and sequential types, or a traditional numeric keypad with alphabet letters associated with a telephone keypad. The input keys may include a trackwheel, an exit or escape key, a trackball, and other navigational or functional keys, which may be inwardly depressed to provide further input function. Another input mechanism may be the LCD 530, which may include touch screen capability and also display text and/or graphics to the user. The LCD controller 532 couples the DSP 502 to the LCD 530.

The CCD camera 534, if equipped, enables the UE 10 to take digital pictures. The DSP 502 communicates with the CCD camera 534 via the camera controller 536. In another embodiment, a camera operating according to a technology other than Charge Coupled Device cameras may be employed. The GPS sensor 538 is coupled to the DSP 502 to decode global positioning system signals, thereby enabling the UE 10 to determine its position. Various other peripherals may also be included to provide additional functions, e.g., radio and television reception.

Figure 6 illustrates a software environment 602 that may be implemented by the DSP 502. The DSP 502 executes operating system drivers 604 that provide a platform from which the rest of the software operates. The operating system drivers 604 provide drivers for the wireless device hardware with standardized interfaces that are accessible to application software. The operating system drivers 604 include application management services ("AMS") 606 that transfer control between applications running on the UE 10. Also shown in Figure 6 are a web browser application 608, a media player application 610, and Java applets 612. The web browser application 608 configures the UE 10 to operate as a web browser, allowing a user to enter information into forms and select links to retrieve and view web pages. The media player application 610 configures the UE 10 to retrieve and play audio or audiovisual media. The Java applets 612 configure the UE 10 to provide games, utilities, and other functionality. A component 614 might provide functionality related to the present disclosure.

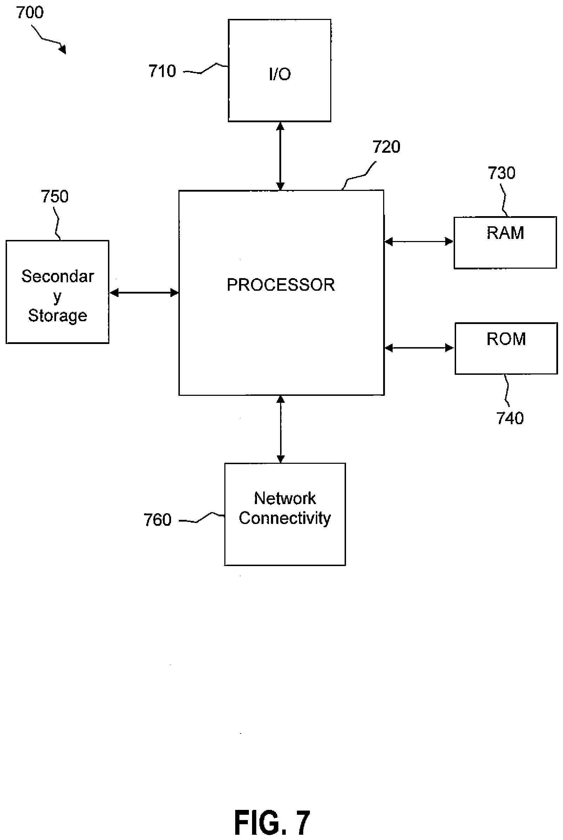

The UEs 10, ENBs 20, and central control 110 of Figure 1 and other components that might be associated with the cells 102 may include any general-purpose computer with sufficient processing power, memory resources, and network throughput capability to handle the necessary workload placed upon it. Figure 7 illustrates a typical, general-purpose computer system 700 that may be suitable for implementing one or more embodiments disclosed herein. The computer system 700 includes a processor 720 (which may be referred to as a central processor unit or CPU) that is in communication with memory devices including secondary storage 750, read only memory (ROM) 740, random access memory (RAM) 730, input/output (I/O) devices 700, and network connectivity devices 760. The processor may be implemented as one or more CPU chips.

The secondary storage 750 is typically comprised of one or more disk drives or tape drives and is used for non-volatile storage of data and as an overflow data storage device if RAM 730 is not large enough to hold all working data. Secondary storage 750 may be used to store programs which are loaded into RAM 730 when such programs are selected for execution. The ROM 740 is used to store instructions and perhaps data which are read during program execution. ROM 740 is a non-volatile memory device which typically has a small memory capacity relative to the larger memory capacity of secondary storage. The RAM 730 is used to store volatile data and perhaps to store instructions. Access to both ROM 740 and RAM 730 is typically faster than to secondary storage 750.

I/O devices 700 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 760 may take the form of modems, modem banks, ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) and/or global system for mobile communications (GSM) radio transceiver cards, and other well-known network devices. These network connectivity 760 devices may enable the processor 720 to communicate with an Internet or one or more intranets. With such a network connection, it is contemplated that the processor 720 might receive information from the network, or might output information to the network in the course of performing the above-described method steps. Such information, which is often represented as a sequence of instructions to be executed using processor 720, may be received from and outputted to the network, for example, in the form of a computer data signal embodied in a carrier wave.

Such information, which may include data or instructions to be executed using processor 720 for example, may be received from and outputted to the network, for example, in the form of a computer data baseband signal or signal embodied in a carrier wave. The baseband signal or signal embodied in the carrier wave generated by the network connectivity 760 devices may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods well known to one skilled in the art.

The processor 720 executes instructions, codes, computer programs, scripts which it accesses from hard disk, floppy disk, optical disk (these various disk-based systems may all be considered secondary storage 750), ROM 740, RAM 730, or the network connectivity devices 760. While only one processor 720 is shown, multiple processors may be present. Thus, while instructions may be discussed as executed by a processor, the instructions may be executed simultaneously, serially, or otherwise executed by one or multiple processors.

There has therefore been provided a system for providing multimedia broadcast multicast services 'MBMS' using a single cell point-to-multipoint 'SC-PTM' communication, comprising: a processor configured to promote transmitting scheduling information for a multicast traffic channel 'MTCH' related to an MBMS service onto a physical downlink control channel 'PDCCH', wherein in a first transmission the scheduling information comprises modulation and coding information related to the MBMS service, and wherein in a second transmission the scheduling information comprises an indicator instead of the modulation and coding information, the indicator related to the MBMS service and indicating to a user equipment to use the modulation and coding information in the first transmission for the MBMS service.

The processor may be further configured to promote transmission of the PDCCH scheduling information comprising a service identifier 'id' instead of a user id. The processor may be further configured to promote transmission of a first MTCH on a first channel and a second MTCH on a second channel, such that the first and second channels are receivable as separate channels by a receiver. The system may be configured to transmit the second transmission subsequent to the first transmission. The system may comprise an enhanced node B. The processor may be further configured to promote transmission via a multicast control channel 'MCCH' of MBMS specific discontinuous reception 'DRx' schedule.

There has also been provided a user equipment 'UE' for receiving multimedia broadcast multicast services 'MBMS' using a single cell point-to-multipoint 'SC-PTM' communication, comprising: a processor configured to promote receiving scheduling information transmitted in a physical downlink control channel 'PDCCH' for a multicast traffic channel 'MTCH' related to an MBMS service of interest to the UE, wherein in a first received transmission the scheduling information comprises modulation and coding information used by the processor for receiving the MBMS service, and wherein in a second received transmission the scheduling information comprises an indicator instead of the modulation and coding information, the processor configured in response to receiving the indicator to use the modulation and coding information from the first transmission to receive the MBMS service.

The processor may be further configured to promote receiving transmission of the PDCCH scheduling information comprising a service identifier 'id' instead of a user id related to the UE. The processor may be further configured to promote receiving a plurality of MTCHs from an enhanced node B, each of the plurality of MTCHs received on separate channels by a receiver of the UE. The UE may be configured to receive the second transmission subsequent to the first transmission. The indicator may comprise a single bit.

There has also been provided a method of providing multimedia broadcast multicast services 'MBMS' using a single cell point-to-multipoint 'SC-PTM' communication, comprising: transmitting scheduling information for a multicast traffic channel 'MTCH' related to an MBMS service onto a physical downlink control channel 'PDCCH', wherein in a first transmission the scheduling information comprises modulation and coding information related to the MBMS service, and wherein in a second transmission the scheduling information comprises an indicator instead of the modulation and coding information, the indicator related to the MBMS service and indicating to a user equipment to use the modulation and coding information in the first transmission for the MBMS service.

There has also been provided a computer readable medium storing computer readable instructions executable by a processor of a computing device to cause said device to implement the steps of such a method.

There has also been provided a method of receiving multimedia broadcast multicast services 'MBMS' using a single cell point-to-multipoint 'SC-PTM' communication, comprising: receiving at a user equipment 'UE' scheduling information transmitted in a physical downlink control channel 'PDCCH' for a multicast traffic channel 'MTCH' related to an MBMS service of interest to the UE, wherein in a first received transmission the scheduling information comprises modulation and coding information used by the processor for receiving the MBMS service, and wherein in a second received transmission the scheduling information comprises an indicator instead of the modulation and coding information; and in response to receiving the indicator, using at the UE the modulation and coding information from the first transmission to receive the MBMS service.

There has also been provided a computer readable medium storing computer readable instructions executable by a processor of a computing device to cause said device to implement the steps of such a method.

There has also been provided a system for providing discontinuous reception 'DRx' in a single cell point-to-multipoint 'SC-PTM' communication, comprising: an enhanced node B 'ENB' configured to promote transmission via a multicast control channel 'MCCH' of multimedia broadcast multicast service 'MBMS' specific discontinuous reception 'DRx' schedule to one or more user equipment 'UE', the MBMS specific DRx schedule related to service scheduling opportunities of one or more MBMSs.

The ENB may be configured to transmit a plurality of MTCHs to one or more UEs without multiplexing. The MBMS specific DRX schedule may be related to any of: a specific MBMS service, a service group comprising a plurality of MBMS services, or one or more MBMS services and one or more service groups comprising a plurality of MBMS services.

There has also been provided a user equipment 'UE' for receiving single cell point-to-multipoint communications, comprising: a processor configured to receive multimedia broadcast multicast service 'MBMS' specific discontinuous reception 'DRx' in a single cell point-to-multipoint 'SC-PTM' environment, the processor further configured to determine at least one of the MBMSs of interest and, using the MBMS specific DRx, to wake during a duration specified by the DRx to receive the MBMS of interest and further configured to sleep based on the duration to conserve power.

There has also been provided a method of providing discontinuous reception 'DRx' in a single cell point-to-multipoint 'SC-PTM' communication, comprising: at an enhanced node B 'ENB', transmitting via a multicast control channel 'MCCH' multimedia broadcast multicast service 'MBMS' specific discontinuous reception 'DRx' schedule to one or more user equipment 'UE', the MBMS specific DRx schedule related to service scheduling opportunities of one or more MBMSs.

There has also been provided a computer readable medium storing computer readable instructions executable by a processor of a computing device to cause said device to implement the steps of such a method.

There has also been provided a method of receiving single cell point-to-multipoint communications, comprising the steps at a user equipment 'UE' of: receiving multimedia broadcast multicast service 'MBMS' specific discontinuous reception 'DRx' in a single cell point-to-multipoint 'SC-PTM' environment; determining at least one of the MBMSs of interest; using the MBMS specific DRx to wake during a duration specified by the DRx to receive the MBMS of interest; and sleeping based on the duration to conserve power.

There has also been provided a computer readable medium storing computer readable instructions executable by a processor of a computing device to cause said device to implement the steps of such a method.

There has also been provided a network control entity in a wireless telecommunication network for scheduling multimedia broadcast multicast services 'MBMS', comprising: a processor configured to promote transmitting a multicast traffic channel 'MTCH' having a substantially semi-persistent service rate in a single cell point-to-multipoint 'SC-PTM' communication, the processor further configured to promote providing a scheduling information related to the MTCH in a multicast control channel 'MCCH'.

The substantially constant service rate may comprise an audio-based service.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

## Claims

1. An enhanced node B "ENB" for use in a wireless communication network, the ENB comprising:
a processor (720) configured to transmit scheduling information (340) for a multicast traffic channel "MTCH" (322) related to at least one multimedia broadcast multicast service "MBMS" service, **characterised in** a first transmission, the scheduling information (340) comprises modulation and coding information (348) related to the MBMS service and, in a second transmission, the scheduling information (340) comprises an indicator instead of the modulation and coding information (348), the indicator indicative of a modulation and coding scheme related to the at least one multimedia broadcast multicast service for a multicast transport channel "MCH".

2. The ENB of Claim 1, wherein the indicator is configured to indicate to a user equipment "UE" in the network to use the same modulation and coding scheme as a modulation and coding scheme previously used by the UE.

3. The ENB of any of the above claims, wherein the processor is further configured to transmit the scheduling information (340) in a physical downlink control channel "PDCCH" (334).

4. The ENB of any of the above claims, wherein the processor is further configured to transmit the scheduling information (340) related to the at least one MBMS over a physical downlink control channel "PDCCH" (334), wherein the scheduling information (340) comprises at least a group identifier related to the MBMS.

5. The ENB of any of the above claims, wherein the processor is further configured to transmit a plurality of multicast traffic channels "MTCHs" at different time periods.

6. A user equipment "UE" for use in a wireless communication network, the UE comprising:
a processor configured to receive scheduling information (340) for a multicast traffic channel "MTCH" related to at least one multimedia broadcast multicast service "MBMS" service, **characterised in** a first transmission, the scheduling information comprises modulation and coding information (348) related to the MBMS service and, in a second transmission, the scheduling information (340) comprises an indicator instead of the modulation and coding information (348), the indicator indicative of a modulation and coding scheme related to the at least one multimedia broadcast multicast service for a multicast transport channel "MCH".

7. The UE of Claim 6, wherein the processor is further configured to receive the scheduling information via a physical downlink control channel "PDCCH" (334).

8. The UE of Claim 6 or 7, wherein the processor is further configured to receive the scheduling information (340) related to the at least one MBMS over a physical downlink control channel "PDCCH" (334), wherein the scheduling information (340) comprises at least a group identifier related to the MBMS.

9. The UE of Claim 6, 7, or 8, wherein the processor is further configured to receive a plurality of multicast traffic channels "MTCHs" at different time periods.

10. A method for operating an enhanced node B "ENB" in a wireless communication network, the method comprising:
transmitting, by the ENB, scheduling information (340) for a multicast traffic channel "MTCH" related to at least one multimedia broadcast multicast service "MBMS" service, **characterised in** a first transmission, the scheduling information (340) comprises modulation and coding information (348) related to the MBMS service and, in a second transmission, the scheduling information (340) comprises an indicator instead of the modulation and coding information (348), the indicator indicative of a modulation and coding scheme related to the at least one multimedia broadcast multicast service for a multicast transport channel "MCH".

11. A method for operating a user equipment "UE" in a wireless communication network, the method comprising:
receiving, by the UE, scheduling information (340) for a multicast traffic channel "MTCH" related to at least one multimedia broadcast multicast service "MBMS" service, **characterised in** a first transmission, the scheduling information (340) comprises modulation and coding information (348) related to the MBMS service and, in a second transmission, the scheduling information (340) comprises an indicator instead of the modulation and coding information (348), the indicator indicative of a modulation and coding scheme related to the at least one multimedia broadcast multicast service for a multicast transport channel "MCH".

12. The ENB of Claim 1, the UE of Claim 6, the method of Claim 10, or the method of Claim 11, wherein the size of data packets for the at least one MBMS is dynamic.

## Patentansprüche

1. Verbesserter Knoten B "ENB" (ENB = enhanced node B) zur Verwendung in einem drahtlosen Kommunikationsnetzwerk, wobei der ENB folgendes umfasst:
einen Prozessor (720), der dazu konfiguriert ist, Terminierungsinformationen (340) für einen Multicast-Verkehrskanal "MTCH" (MTCH = multicast traffic channel) (322) zu übertragen, der sich auf mindestens einen Multimediaübertragungs-Multicast-Dienst "MBMS" (MBMS = Multimedia Broadcast Multicast Service) bezieht, **dadurch gekennzeichnet, dass** in einer ersten Übertragung die Terminierungsinformationen (340) Modulations- und Kodierungsinformationen (348) umfassen, die sich auf den MBMS-Dienst beziehen, und in einer zweiten Übertragung die Terminierungsinformationen (340) einen Indikator anstelle der Modulations- und Kodierungsinformationen (348) umfassen, wobei der Indikator ein Modulations- und Kodierungsschema anzeigt, welches sich auf den mindestens einen Multimediaübertragungs-Multicast-Dienst für einen Multicast-Transportkanal "MCH" (MCH = multicast transport channel) bezieht.

2. Der ENB gemäß Anspruch 1, wobei der Indikator dazu konfiguriert ist, einer Benutzervorrichtung "UE" (UE = user equipment) im Netzwerk anzuzeigen, dass sie das gleiche Modulations- und Kodierungsschema wie ein Modulations- und Kodierungsschema verwendet, das zuvor von der UE verwendet wurde.

3. Der ENB gemäß einem der vorstehenden Ansprüche, wobei der Prozessor ferner dazu konfiguriert ist, die Terminierungsinformation (340) in einem physikalischen Downlink-Steuerkanal "PDCCH" (PDCCH = physical downlink control channel) (334) zu übertragen.

4. Der ENB gemäß einem der vorstehenden Ansprüche, wobei der Prozessor ferner dazu konfiguriert ist, die Terminierungsinformationen (340), die sich auf den mindestens einen MBMS beziehen, über einen physikalischen Downlink-Steuerungskanal "PDCCH" (334) zu übertragen, wobei die Terminierungsinformationen (340) mindestens eine Gruppenkennung umfassen, die sich auf den MBMS bezieht.

5. Der ENB gemäß einem der vorstehenden Ansprüche, wobei der Prozessor ferner dazu konfiguriert ist, eine Vielzahl von Multicast-Verkehrskanälen "MTCHS" in verschiedenen Zeiträumen zu übertragen.

6. Eine Benutzervorrichtung "UE" zur Verwendung in einem drahtlosen Kommunikationsnetzwerk, wobei die UE folgendes umfasst:
einen Prozessor, der dazu konfiguriert ist, Terminierungsinformationen (340) für einen Multicast-Verkehrskanal "MTCH" (322) zu empfangen, der sich auf mindestens einen Multimediaübertragungs-Multicast-Dienst "MBMS" (MBMS = Multimedia Broadcast Multicast Service) bezieht, **dadurch gekennzeichnet, dass** in einer ersten Übertragung die Terminierungsinformationen Modulations- und Kodierungsinformationen (348) umfassen, die sich auf den MBMS-Dienst beziehen, und in einer zweiten Übertragung die Terminierungsinformationen (340) einen Indikator anstelle der Modulations- und Kodierungsinformationen (348) umfassen, wobei der Indikator ein Modulations- und Kodierungsschema anzeigt, welches sich auf den mindestens einen Multimediaübertragungs-Multicast-Dienst für einen Multicast-Transportkanal "MCH" bezieht.

7. Die UE gemäß Anspruch 6, wobei der Prozessor ferner dazu konfiguriert ist, die Terminierungsinformation über einen physikalischen Downlink-Steuerungskanal "PDCCH" (334) zu empfangen.

8. Die UE gemäß Anspruch 6 oder 7, wobei der Prozessor ferner dazu konfiguriert ist, die Terminierungsinformationen (340), die sich auf den mindestens einen MBMS beziehen, über einen physikalischen Downlink-Steuerkanal "PDCCH" (334) zu empfangen, wobei die Terminierungsinformationen (340) mindestens eine Gruppenkennung umfassen, die sich auf den MBMS bezieht.

9. Die UE gemäß Anspruch 6, 7 oder 8, wobei der Prozessor ferner dazu konfiguriert ist, eine Vielzahl von Multicast-Verkehrskanälen "MTCHS" in verschiedenen Zeiträumen zu empfangen.

10. Ein Verfahren zum Betreiben eines verbesserten Knoten B "ENB" in einem drahtlosen Kommunikationsnetzwerk, wobei das Verfahren die folgenden Schritte umfasst:
Übertragen von Terminierungsinformationen (340) durch den ENB für einen Multicast-Verkehrskanal "MTCH", die sich auf mindestens einen Multimediaübertragungs-Multicast-Dienst "MBMS" beziehen, **dadurch gekennzeichnet, dass** in einer ersten Übertragung die Terminierungsinformationen (340) Modulations- und Kodierungsinformationen (348) umfassen, die sich auf den MBMS-Dienst beziehen, und in einer zweiten Übertragung die Terminierungsinformationen (340) einen Indikator anstelle der Modulations- und Kodierungsinformationen (348) umfassen, wobei der Indikator ein Modulations- und Kodierungsschema anzeigt, welches sich auf den mindestens einen Multimediaübertragungs-Multicast-Dienst für einen Multicast-Transportkanal "MCH" bezieht.

11. Verfahren zum Betreiben einer Benutzereinrichtung "UE" (UE = user equipment) in einem drahtlosen Kommunikationsnetzwerk, wobei das Verfahren die folgenden Schritte umfasst:
Empfangen von Terminierungsinformationen (340) durch die UE, für einen Multicast-Verkehrskanal "MTCH", der sich auf mindestens einen Multimediaübertragungs-Multicast-Dienst "MBMS" bezieht, **dadurch gekennzeichnet, dass** in einer ersten Übertragung die Terminierungsinformationen (340) Modulations- und Kodierungsinformationen (348) umfassen, die sich auf den MBMS-Dienst beziehen, und dass in einer zweiten Übertragung die Terminierungsinformationen (340) einen Indikator anstelle der Modulations- und Kodierungsinformationen (348) umfassen, wobei der Indikator ein Modulations- und Kodierungsschema anzeigt, das sich auf den mindestens einen Multimediaübertragungs-Multicast-Dienst für einen Multicast-Transportkanal "MCH" bezieht.

12. Der ENB gemäß Anspruch 1, die UE gemäß Anspruch 6, das Verfahren gemäß Anspruch 10 oder das Verfahren gemäß Anspruch 11, wobei die Größe der Datenpakete für das mindestens eine MBMS dynamisch ist.

## Revendications

1. Noeud B amélioré "ENB" destiné à être utilisé dans un réseau de communication sans fil, l'ENB comprenant :
un processeur (720) configuré pour transmettre des informations de planification (340) à un canal de trafic multidiffusion "MTCH" (322) liées à au moins un service de multidiffusion et de diffusion multimédia, service "MBMS", **caractérisé en ce que**,
lors d'une première transmission, les informations de planification (340) comprennent des informations de modulation et de codage (348) liées au service MBMS et, lors d'une deuxième transmission, les informations de planification (340) comprennent un indicateur au lieu des informations de modulation et de codage (348), l'indicateur indiquant un schéma de modulation et de codage lié à l'au moins un service de multidiffusion et de diffusion multimédia pour un canal de transport multidiffusion "MCH".

2. ENB de la revendication 1, dans lequel l'indicateur est configuré pour indiquer à un équipement utilisateur "UE" dans le réseau d'utiliser le même schéma de modulation et de codage qu'un schéma de modulation et de codage précédemment utilisé par l'UE.

3. ENB de l'une des revendications précédentes, dans lequel le processeur est en outre configuré pour transmettre les informations de planification (340) dans un canal de commande de liaison descendante physique "PDCCH" (334) .

4. ENB de l'une des revendications précédentes, dans lequel le processeur est en outre configuré pour transmettre les informations de planification (340) liées à l'au moins un MBMS sur un canal de commande de liaison descendante physique "PDCCH" (334), où les informations de planification (340) comprennent au moins un identifiant de groupe lié au MBMS.

5. ENB de l'une des revendications précédentes, dans lequel le processeur est en outre configuré pour transmettre une pluralité de canaux de trafic multidiffusion "MTCH" à différentes périodes.

6. Équipement utilisateur "UE" destiné à être utilisé dans un réseau de communication sans fil, l'UE comprenant :
un processeur configuré pour recevoir des informations de planification (340) pour un canal de trafic multidiffusion "MTCH" liées à au moins un service de multidiffusion et de diffusion multimédia, service "MBMS", **caractérisé en ce que**,
lors d'une première transmission, les informations de planification comprennent des informations de modulation et de codage (348) liées au service MBMS et, lors d'une deuxième transmission, les informations de planification (340) comprennent un indicateur au lieu des informations de modulation et de codage (348), l'indicateur indiquant un schéma de modulation et de codage lié à l'au moins un service de multidiffusion et de diffusion multimédia pour un canal de transport multidiffusion "MCH".

7. UE de la revendication 6, dans lequel le processeur est en outre configuré pour recevoir les informations de planification via un canal de commande de liaison descendante physique "PDCCH" (334).

8. UE de la revendication 6 ou 7, dans lequel le processeur est en outre configuré pour recevoir les informations de planification (340) liées à l'au moins un MBMS sur un canal de commande de liaison descendante physique "PDCCH" (334), où les informations de planification (340) comprennent au moins un identifiant de groupe lié au MBMS.

9. UE de la revendication 6, 7 ou 8, dans lequel le processeur est en outre configuré pour recevoir une pluralité de canaux de trafic multidiffusion "MTCH" à différentes périodes.

10. Procédé pour faire fonctionner un noeud B amélioré "ENB" dans un réseau de communication sans fil, le procédé comprenant l'étape consistant à :
transmettre, par l'ENB, des informations de planification (340) à un canal de trafic multidiffusion "MTCH" liées à au moins un service de multidiffusion et de diffusion multimédia, service "MBMS", **caractérisé en ce que**,
lors d'une première transmission, les informations de planification (340) comprennent des informations de modulation et de codage (348) liées au service MBMS et, lors d'une deuxième transmission, les informations de planification (340) comprennent un indicateur au lieu des informations de modulation et de codage (348), l'indicateur indiquant un schéma de modulation et de codage lié à l'au moins un service de multidiffusion et de diffusion multimédia pour un canal de transport multidiffusion "MCH".

11. Procédé pour faire fonctionner un équipement utilisateur "UE" dans un réseau de communication sans fil, le procédé comprenant l'étape consistant à :
recevoir, par l'UE, des informations de planification (340) pour un canal de trafic multidiffusion "MTCH" liées à au moins un service de multidiffusion et de diffusion multimédia, service "MBMS", **caractérisé en ce que**
lors d'une première transmission, les informations de planification (340) comprennent des informations de modulation et de codage (348) liées au service MBMS et, lors d'une deuxième transmission, les informations de planification (340) comprennent un indicateur au lieu des informations de modulation et de codage (348), l'indicateur indiquant un schéma de modulation et de codage lié à l'au moins un service de multidiffusion et de diffusion multimédia pour un canal de transport multidiffusion "MCH".

12. ENB de la revendication 1, UE de la revendication 6, procédé de la revendication 10 ou procédé de la revendication 11, où la taille des paquets de données pour l'au moins un MBMS est dynamique.
